# EUROPÄISCHE PATENTSCHRIFT

(11) **EP 0 945 331 B1**
(45) Veröffentlichungstag und Bekanntmachung des Hinweises auf die Patenterteilung: **21.05.2003**
(21) Anmeldenummer: 99105521.1
(22) Anmeldetag: 18.03.1999
(51) Int. Cl.: B62D 65/00

(54) **Anlage zum Anbau der Chassis-Aggregate an eine Karosserie eines Kraftfahrzeuges**
Plant for the installaton of frame components to vehicle bodies
Insatallation pour le montage de parts de chassis dans une carrosserie de véhicule

(30) Priorität: 27.03.1998 DE 19813547
(43) Veröffentlichungstag der Anmeldung: 29.09.1999
(73) Patentinhaber: ADAM OPEL AG, 65423 Rüsselsheim (DE)
(72) Erfinder: Decker, Jürgen, Dipl.-Ing.(FH), 55767 Brücken (DE)
(74) Vertreter: Kümpfel, Heinz, Dipl.-Ing.

(56) Entgegenhaltungen:
- EP-A- 0 751 061
- US-A- 4 813 529
- PATENT ABSTRACTS OF JAPAN vol. 008, no. 220 (M-330), 6. Oktober 1984 (1984-10-06) & JP 59 102665 A (DAIFUKU KIKO KK), 13. Juni 1984 (1984-06-13)

## Beschreibung

Die Erfindung betrifft eine Anlage zum Anbau der Chassis-Aggregate an eine Karosserie eines Kraftfahrzeuges nach dem Oberbegriff des Patentanspruches 1.

Eine derartige Anlage ist mit EP 0 751 061 B1 beschrieben. Bei dieser bekannten Anlage werden Montageböcke, auf welchen die Chassis-Aggregate außerhalb des Montagebandes aufgelegt sind, auf einem Ovalband geführt, dessen eine Längsseite parallel zum Montageband und dessen andere Längsseite unterhalb des Montagebandes verläuft. Die Montageböcke laufen auf dem Ovalband mit der gleichen Geschwindigkeit wie die am Hängeförderer befindlichen Karosserien. Jeder unterhalb einer Karosserie angelangte Montagebock wird von dieser Karosserie während des Fügeprozesses mitgeführt, wobei die auf Schwimmplatten aufliegenden Chassis-Aggregate durch Zentriermittel gegenüber der Karosserie vor ihrer Befestigung ausgerichtet werden.

Eine solche Anlage ist für die Fertigung großer und gleichbleibender Stückzahlen gerechtfertigt und auch gut geeignet. Bei geringeren zu fertigenden Stückzahlen ist der Aufwand für die erforderliche Mehrzahl von Montageböcken nachteilig hoch. Von Nachteil ist auch der relativ hohe Flächenbedarf für das parallel zum Montageband über eine längere Distanz erforderliche Ovalband zur Führung der Montageböcke.

Mit US-A-4 813 529 ist ein Fördersystem zur Anwendung in einer Montageanlage für Kraftfahrzeuge beschrieben, bei welcher die Karosserien durch einen als Hängeförderer ausgebildeten Endlosförderer transportiert werden. Um das Antriebsaggregat des Kraftfahrzeuges an die jeweilige Karosserie montieren zu können, wird diese Karosserie durch einen im Stop-and-go-Betrieb arbeitenden Nebenförderer vom Endlosförderer gelöst und zu einer Montagestation verbracht. An dieser Montagestation ist ein Montagebock vorgesehen, auf dem das zu montierende Antriebsaggregat aufgelegt und mit dem es senkrecht zur Förderrichtung des Nebenförderers unter die stillstehende Karosserie gebracht wird. Eine Hubeinrichtung im Montagebock hebt das Aggregat zu der darüber befindlichen Karosserie, an der es befestigt werden kann. Nach dieser Montage und nach dem Zurückfahren des Montagebockes in die Ausgangslage wird die Karosserie mit dem anmontierten Antriebsaggregat durch den Nebenförderer aus dem Stillstand wieder in Bewegung gesetzt und in den Endlosförderer eingereiht.

Eine mit diesem Fördersystem ausgerüstete Montageanlage erfordert durch die Notwendigkeit zumindest eines Nebenförderers erheblich mehr Grundfläche als eine Anlage ohne einen Nebenförderer. Durch den Stop-and-go-Betrieb des Nebenförderers wird gegenüber eines kontinuierlichen Förderbetriebes der Verschleiß der Anlage erhöht. Das Investment einer solchen Anlage ist relativ hoch.

Aufgabe der Erfindung ist es, eine Anlage zum Anbau der Chassis-Aggregate an eine Karosserie eines Kraftfahrzeuges zu schaffen, die gegenüber den relativ aufwendigen gattungsgemäßen und insbesondere für große und gleichbleibende Stückzahlen ausgelegten Anlagen mit einem deutlich niedrigeren Investment realisierbar ist, einen geringen Flächenbedarf hat und die auf einfache Weise an unterschiedliche kleine Fertigungsstückzahlen anpassbar ist, wobei die Qualität der Montagearbeit gegenüber den aufwendigen Anlagen für große Stückzahlen nicht beeinträchtigt ist.

Die Erfindung löst diese Aufgabe mit den Merkmalen des Patentanspruches 1. Gegenstand der Unteransprüche sind vorteilhafte Weiterbildungen der Erfindung.

Zur lagegerechten Aufnahme der Chassis-Aggregate ist bei dieser Anlage nur ein Montagebock erforderlich. Dieser ist lediglich quer zum Montageband zwischen einer Aufrüststation außerhalb der Montagelinie und einer Montagestation in der Montagelinie verfahrbar, so dass ein parallel zum Montageband verlaufender Fahrweg für den Montagebock nicht benötigt wird. Dieser einzige Montagebock ist so lang, dass die von ihm getragene Schwimmplatte zusammen mit den Aufnahmen für die Chassis-Aggregate und mit den darauf aufgelegten Chassis-Aggregaten während der Verbindungsoperation von Chassis-Aggregaten und Karosserie auf der Hubplatte den Weg der darüber befindlichen Karosserie mitgehen kann, während der Montagebock in der Montagestation des Montagebandes stillstehend verbleibt.

Der Montagebock kann bei Aufenthalt in der Aufrüststation bei guter Zugänglichkeit bequem mit den Chassis-Aggregaten bestücke werden. Er wird nach der Bestükkung tatktmäßig unter die am Hängeförderer befindlichen und kontinuierlich transportierten Karosserien in die Montagestation gebracht. In dieser wird die Hubplatte des Montagebockes angehoben, wobei gleichzeitig über Zentriermittel in an sich bekannter Weise die Aggregate zur Karosserie zentriert werden und gegenüber der Karosserie in Einbaulage gelangen. Dabei fährt die Schwimmplatte zusammen mit den von ihr getragenen Aggregaten auf dem stillstehenden Montagebock den Weg der über ihr befindlichen Karosserie solange mit, bis die Verbindungsoperationen zwischen der Karosserie und den Chassis-Aggregaten abgeschlossen sind. Daraufhin senkt sich die Hubplatte und der Montagebock kann aus der Montagestation heraus in seine Aufrüststation verbracht werden.

Bei Erhöhung der Fertigungsstückzahl kann es von Vorteil sein, wenn die Aufrüststation mit zumindest einem Aufrüstbock versehen ist, auf dem die Chassis-Aggregate vorbereitend aufgelegt werden, solange sich der Montagebock in der Montagestation befindet. Damit kann die Verweildauer des Montagebockes in der Aufrüststation reduziert werden.

Durch die Anordnung von jeweils einem Aufrüstbock an jeder Stirnseite des in der Aufrüststation befindlichen Montagebockes kann die Verweildauer des Montagebockes in der Aufrüststation weiter reduziert werden, indem abwechselnd der eine Aufrüstbock die Schwimmplatte bzw. die Aufnahmen von der Schwimmplatte zum erneuten Bestücken übernimmt, währenddessen gleichzeitig vom anderen Aufrüstbock ein bereits bestückter zweiter Satz von Schwimmplatten bzw. Aufnahmen auf den Montagebock verbracht wird.

Durch Verlängerung des rechtwinklig zur Montagelinie verlaufenden Verschiebeweges des Montagebockes können bei Erfordernis auch zwei oder mehr Aufrüsrscationen vorgesehen sein, so daß die Zeit für die Vorbereitungsarbeiten beim Auflegen der Chassis-Aggregate gut an die Arbeitszeiten an der Montagelinie anpaßbar ist. Auch die zweite Aufrüststation kann nach Erfordernis mit Aufrüscböcken versehen sein.

Ein Ausführungsbeispiel der Erfindung ist nachstehend anhand einer Zeichnung näher beschrieben. Es zeigen
- Fig. 1:: die schematisierte Seitenansicht einer Anlage nach der erfindung;
- Fig. 2:: die schematisierte Draufsicht auf die Anlage nach Figur 1.

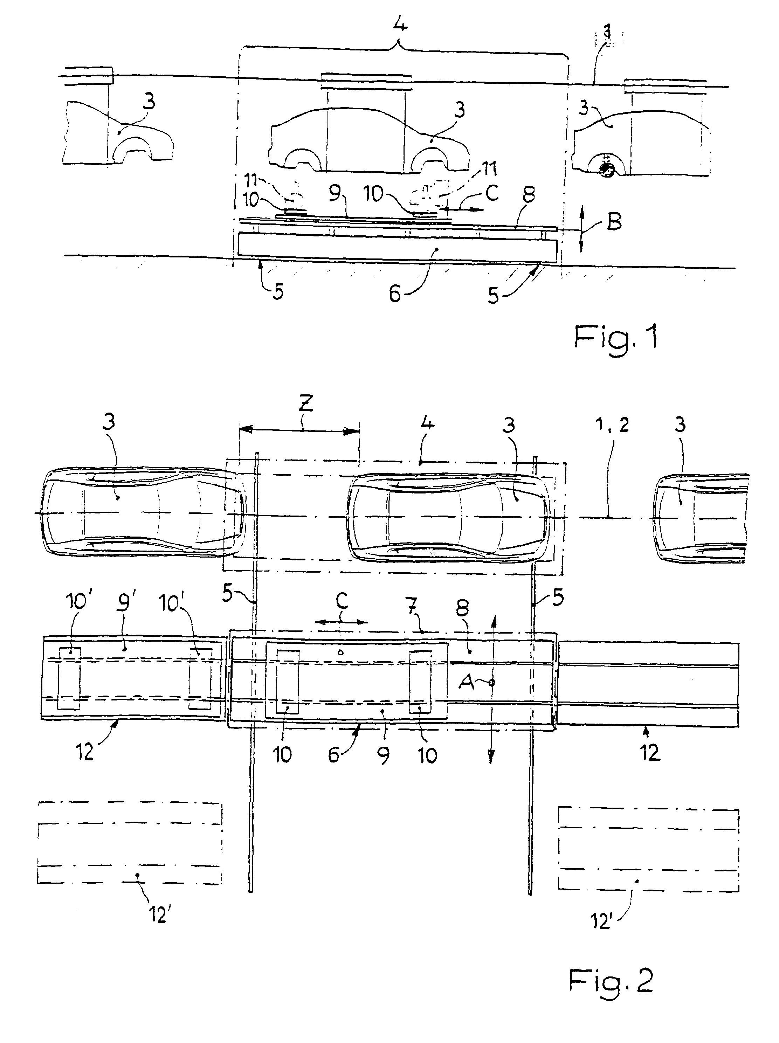

Ein Hängeförderer 1 entlang einer Montagelinie 2 fördert Karosserien 3 kontinuierlich durch eine Montagestation 4. In die Montagestation 4 ist auf Schienen 5 ein Montagebock 6 von einer Seite der Montagelinie 2 her, an der sich auf eine Aufrüststation 7 befindet, einfahrbar, indem er in Richtung der Pfeile A (Figur 2) verschiebbar ist. Der Montagebock 6 ist mit einer vertikal (in Richtung der Pfeile B - Figur 1) verstellbaren Hubplacte 8 versehen. Auf der Hubplatte 8 ist eine Schwimmplatte 9 verschiebbar (in Richtung der Pfeile C) gelagert. Die Schwimmplatte 9 trägt Aufnahmen 10, die gegenüber der Schwimmplatte 9 in geringem Umfang sowohl in Richtung der Montagelinie 2 als auch quer dazu verschiebbar sind. Auf den Aufnahmen 10 sind Chassis-Aggregate 11 in einer Konfiguration aufgelegt, wie sie an der Karosserie 3 befestigt werden sollen.

An der Aufrüststation 7 schließt sich an den Stirnseiten des Montagebockes 6 jeweils ein Aufrüstbock 12 an. Einer der Aufrüstböcke 12 trägt einen zweiten Satz der Schwimmplatte 9' mit Aufnahmen 10'. Zwei weitere Aufrüstböcke 12' können vorgesehen sein und sind mit strichpunktierten Linien angedeutet.

In der Aufrüststation 7 wird der Aufrüstbock 12, der gerade mit der Schwimmplatte 9' bestückt ist, mit den an die Karosserie 3 anzubauenden Aggregaten 11 beladen. Nachdem der Montagebock 6 auf den Schienen 5 von der Montagestation 4 aus der Montagelinie 2 heraus in die Aufrüststation verbracht ist, kann die auf ihm befindliche leere Schwimmplatte 9 auf den freien (auf der Zeichnung rechten) Aufrüstbock 12 geschoben werden. Die beladene Schwimmplatte 9' des anderen Aufrüstbockes 12 kann nun auf den Montagebock 6 gelangen. Der somit mit Chassis-Aggregaten 11 beladene Montagebock 6 wird auf Schienen 5 auf die Montagelinie 2 verbracht. Sobald eine der Karosserien 3 über den Montagebock 6 gelangt, wird die Hubplatte 8 angehoben und gleichzeitig bringen nicht dargestellte Zentriermittel die Chassis-Aggregate 11 in die für den Anbau an die Karosserie 3 richtige Position. Dabei können sich die Schwimmplatte 9 gegenüber der Hubplatte 8 und die Aufnahmen 10 gegenüber der Schwimmplatte 9 so verschieben, daß vorhandene Toleranzen gegenüber der Karosserie 3 ausgeglichen sind. Im Verlauf des Montageweges Z, bei dem sich die Schwimmplatte 9 auf dem stillstehenden Montagebock 6 im Gleichlauf mit der Karosserie 3 bewegt, werden die Verbindungsoperationen zwischen den Chassis-Aggregaten 11 und der Karosserie 3 ausgeführt. Zeitlich parallel dazu werden auf einem der Aufrüstböcke 12 die Chassis-Aggregate 11 an die nächste Karosserie 3 auf die freien Aufnahmen 10' aufgelegt.

Falls zur Erhöhung der Montagekapazität ein weiteres Paar von Aufrüstböcken 12' vorgesehen ist, kann zeitlich parallel zu den Verbindungsoperationen auch hier einer dieser Aufrüstböcke 12' mit Chassis-Aggregaten 11 für eine weitere Karosserie 3 bestückt werden.

Mit der Erfindung ist somit eine Anlage geschaffen, mit der in hoher Qualität die Verbindungsoperationen zwischen den Chassis-Aggregaten und einer Karosserie eines Kraftfahrzeuges ausführbar sind, wobei diese Anlage mit relativ niedrigen Investment herstellbar und sehr flexibel an unterschiedliche zu fertigende Stückzahlen anpaßbar ist.

## Patentansprüche

1. Anlage zum Anbau von Chassis-Aggregaten an eine Karosserie eines Kraftfahrzeuges,
- mit einem Hängeförderer (1) entlang einer Montagelinie (2),
- mit am Hängeförderer (1) geführten Karosseriegehängen zur Aufnahme von Karosserien (3),
- mit einem unterhalb der Karosserien (3) befindlichen Montagebock (6) mit zumindest einer ausfahrbaren Hubplatte (8) und einer auf der Hubplatte (8) verschiebbaren Schwimmplatte (9),
- mit Aufnahmen (10) auf der Schwimmplatte (9) zur Halterung der Chassis-Aggregate (11),
- mit Zentriermitteln zum zentrierten Ausrichten der Chassis-Aggregate (11) gegenüber einer am Hängeförderer (1) darüber befindlichen Karosserie (3),
**dadurch gekennzeichnet, dass** der Montagebock (6) lediglich quer zur Förderrichtung des kontinuierlich laufenden Hängeförderers (1) zwischen einer seitlich vom Hängeförderer (1) befindlichen Aufrüststation (7) und einer unterhalb des Hängeförderers (1) befindlichen Montagestation (4) versetzbar ist und der Montagebock (6) zum Verschieben der Schwimmplatte (9) eine sich in Förderrichtung des Hängeförderers (1) erstreckende Länge aufweist, die zumindest so lang ist wie der Montageweg (Z), welcher der Strecke entspricht, die von der Karosserie (3) am Hängeförderer (1) während der Zentrier- und Verbindungsoperationen zwischen den auf der Schwimmplatte (9) aufliegenden Chassis-Aggregaten (11) und der Karosserie (3) zurückgelegt wird.

2. Anlage nach Anspruch 1, **dadurch gekennzeichnet, daß** in der Aufrüststation (7) in Verlängerung des Montagebockes (6) zumindest ein Aufrüstbock (12) so angeordnet ist, daß darauf zur Montage vorbereitete Chassis-Aggregate (11) von ihm auf den Montagebock (6) aufschiebbar sind.

3. Anlage nach Anspruch 1 und 2, **dadurch gekennzeichnet, daß** der Montagebock (6) alternativ zu mehreren nebeneinander befindlichen Aufrüststationen (7) versetzbar ist.

4. Anlage nach Anspruch 3, **dadurch gekennzeichnet, daß** jede der Aufrüststationen (7) mit zumindest einem Aufrüstbock (12) versehen ist.

5. Anlage nach zumindest einem der Ansprüche 1 bis 4, **dadurch gekennzeichnet, daß** jeder Aufrüststation (7) zwei Aufrüstböcke (12) zugeordnet sind, von denen jeweils einer an jeder der beiden Stirnseiten des Montagebockes (6) anschließt und wechselweise die leeren Schwimmplatten (9) des Montagebockes (6) für die Neuaufrüstung mit Chassis-Aggregaten (11) aufnimmt.

## Claims

1. Apparatus for mounting chassis units on a body of a motor vehicle,
- with an overhead conveyer (1) along an assembly line (2),
- with body hangers which are guided on the overhead conveyor (1) for holding bodies (3),
- with an assembly block (6) located beneath the bodies (3), with at least one extendable lifting plate (8) and a floating plate (9) displaceable on the lifting plate (8),
- with holders (10) on the floating plate (9) for supporting the chassis units (11),
- with centring means for centred alignment of the chassis units (11) relative to a body (3) located on the overhead conveyor (1) thereabove,
**characterised in that** the assembly block (6) is movable only transversely to the direction of transport of the continuously moving overhead conveyor (1) between a fitting station (7) located laterally of the overhead conveyor (1) and an assembly station (4) located below the overhead conveyor (1), and the assembly block (6) for displacement of the floating plate (9) has a length extending in the direction of transport of the overhead conveyor (1) which is at least as long as the assembly path (Z) which corresponds to the distance covered by the body (3) on the overhead conveyor (1) during the centring and connecting operations between the chassis units (11) resting on the floating plate (9) and the body (3).

2. Apparatus according to claim 1, **characterised in that** at least one fitting block (12) is arranged in the fitting station (7) in extension of the assembly block (6) in such a way that chassis units (11) prepared for assembly thereon can be fitted by it on the assembly block (6).

3. Apparatus according to claims 1 and 2, **characterised in that** the assembly block (6) is movable alternatively to several fitting stations (7) located adjacent to each other.

4. Apparatus according to claim 3, **characterised in that** each of the fitting stations (7) is provided with at least one fitting block (12).

5. Apparatus according to one or more of claims 1 to 4, **characterised in that** associated with each fitting station (7) are two fitting blocks (12), one of which adjoins each of the two end faces of the assembly block (6) and alternately receives the empty floating plates (9) of the assembly block (6) for refitting with chassis units (11).

## Revendications

1. Installation pour le montage d'éléments de châssis sur une carrosserie d'un véhicule automobile, comportant
- un convoyeur aérien (1), disposé le long d'une ligne d'assemblage (2),
- des suspentes de carrosserie destinées à recevoir des carrosseries (3), qui se déplacent sur le convoyeur aérien (1),
- un berceau de montage (6) placé en-dessous des carrosseries (3), avec au moins un plateau élévateur (8) et un plateau flottant (9) pouvant se déplacer sur le plateau élévateur (8),
- des moyens de réception (10) prévus sur le plateau flottant (9) pour tenir les éléments de châssis (11),
- des moyens de centrage pour le positionnement centré des éléments de châssis (11) par rapport à une carrosserie (3) située au-dessus, sur le convoyeur aérien (1),
**caractérisée en ce que** le berceau de montage (6) ne peut se déplacer que transversalement à la direction de transport du convoyeur aérien (1), qui circule en continu entre un poste de préparation (7) placé sur le côté du convoyeur aérien (1) et un poste de montage (4) situé en-dessous du convoyeur aérien (1), et **en ce que** le berceau de montage (6), pour le déplacement du plateau flottant (9), présente une longueur dans la direction de transport du convoyeur aérien (1) qui est au moins égale à la course de montage (Z), correspondant au trajet parcouru par la carrosserie (3) sur le convoyeur aérien (1) pendant les opérations de centrage et d'assemblage entre les éléments de châssis (11) placés sur le plateau flottant (9) et la carrosserie (3).

2. Installation selon la revendication 1, **caractérisée en ce que** dans le poste de préparation (7), dans le prolongement du berceau de montage (6), au moins un berceau de préparation (12) est disposé de telle sorte que des éléments de châssis (11) préparés sur celui-ci en vue du montage puissent être chargés sur le berceau de montage (6).

3. Installation selon les revendications 1 et 2, **caractérisée en ce que** le berceau de montage (6) peut être déplacé de manière alternative dans plusieurs postes de préparation (7) disposés les uns à côté des autres.

4. Installation selon la revendication 3, **caractérisée en ce que** chaque poste de préparation (7) comporte au moins un berceau de préparation (12).

5. Installation selon au moins une des revendications 1 à 4, **caractérisée en ce qu'**à chaque poste de préparation (7) sont associés deux berceaux de préparation (12) qui sont disposés chacun à une des dexu extrémités frontales du berceau de montage (6) et reçoivent alternativement les plateaux flottants (9) vides du berceau de montage (6) pour être de nouveau équipés d'éléments de châssis (11).
